(19) Europäisches Patentamt
European Patent Office
Office européen des brevets

(11) **EP 3 165 089 A1**

(12) **EUROPÄISCHE PATENTANMELDUNG**

(43) Veröffentlichungstag:
**10.05.2017  Patentblatt 2017/19**

(51) Int Cl.:
*A01M 7/00* (2006.01)      *G01N 21/25* (2006.01)
*G01N 21/29* (2006.01)      *A01B 79/00* (2006.01)

(21) Anmeldenummer: **16197536.2**

(22) Anmeldetag: **07.11.2016**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(30) Priorität: **05.11.2015   DE 102015119026**

(71) Anmelder: **Premosys GmbH
54578 Wiesbaum (DE)**

(72) Erfinder:
• **Schulze-Lammers, Peter
53225 Bonn (DE)**
• **Schmittmann, Oliver
53121 Bonn (DE)**
• **Kuhl, Markus
54576 Hillesheim (DE)**
• **Kuhl, Matthias
54570 Kalenborn-Scheuern (DE)**

(74) Vertreter: **Hennicke, Ernst Rüdiger
Patentanwälte,
Buschhoff-Hennicke-Althaus
Kaiser-Wilhelm-Ring 24
50672 Köln (DE)**

(54) **SYSTEM ZUR PUNKTGENAUEN AUSBRINGUNG VON FLÜSSIGKEITEN, VORZUGSWEISE HERBIZIDEN, VERWENDUNG DES SYSTEMS ZUR GEZIELTEN BEKÄMPFUNG VON UNKRAUT UND ENTSPRECHENDES VERFAHREN**

(57)     Die vorliegende Erfindung betrifft ein System zur punktgenauen Ausbringung von Flüssigkeiten, vorzugsweise Herbiziden, mit wenigstens einem lichtsensitiven Sensor, mit wenigstens einem Sprühkopf für die aufzubringende Flüssigkeit und mit einer Auswerteeinheit zur Steuerung der Sprühköpfe. Um mit dem System die Menge des verwendeten Herbizides reduziert zu können und trotzdem eine gute Wirkung gegen Unkraut zu erhalten wird erfindungsgemäß vorgesehen, dass der lichtsensitive Sensor oder zumindest einer der lichtsensitiven Sensoren mit mehreren für unterschiedliche Farbräume sensitiven Kanälen ausgestattet ist. Die Erfindung betrifft auch die Verwendung eines entsprechenden Systems zur gezielten Bekämpfung von Unkraut sowie ein Verfahren zur punktgenauen Ausbringung von Flüssigkeiten (Fig. 2).

FIG 2

EP 3 165 089 A1

## Beschreibung

Die vorliegende Erfindung betrifft ein System zur punktgenauen Ausbringung von Flüssigkeiten, vorzugsweise Herbiziden, mit wenigstens mit wenigstens einem Sprühkopf für die aufzubringende Flüssigkeit und mit einer Auswerteeinheit zur Steuerung der Sprühköpfe. Die Erfindung betrifft auch die Verwendung eines entsprechenden Systems zur gezielten Bekämpfung von Unkraut durch punktgenaues Ausbringen von Herbiziden auf das Unkraut sowie ein Verfahren zur punktgenauen Ausbringung von Flüssigkeiten.

Üblicherweise wird zur Bekämpfung von Unkräutern ein Herbizid großflächig mittels eines Spritz-Gestänges auf Pflanzen und/oder Böden versprüht. Ein typisches Spritz-Gestänge weist eine Vielzahl an Sprühköpfen auf, die in Reihe an einem Gestänge angebracht sind. Aus einem Vorratstank wird das Herbizid über ein Pumpensystem an die Sprühköpfe verteilt und kann anschließend über die Sprühköpfe versprüht werden. Dabei weist das Spritz-Gestänge beispielsweise ein eigenes Fahrwerk auf und wird an einem Traktor angehängt über die zu behandelnde Fläche gezogen.

Nachteil bei dieser großflächigen Versprühung von Herbiziden ist, dass die Herbizide willkürlich auf die Nutzpflanzen, den Boden und das Unkraut versprüht werden. Insbesondere bei Nahrungspflanzen wird der großflächige Einsatz von Herbiziden immer kritischer beurteilt, da hierbei Rückstände des Herbizides in der Nahrungspflanze nicht auszuschließen sind. Neben diesem ökologischen Aspekt ist das großflächige Aufbringen von Herbiziden auch aus ökonomischer Sicht kritisch zu beurteilen, da hierbei große Mengen des Herbizides ausgesprüht werden und nur ein Bruchteil des aufgebrachten Herbizides schlussendlich gegen unerwünschtes Unkraut wirkt.

Ein Ansatz, den Herbizideinsatz zu reduzieren, ist ein punktuelles, bedarfsgerechtes Versprühen des Herbizides über einzelne Düsen direkt auf das Unkraut. Für einen automatisierten Vorgang ist hierfür allerdings eine Voraussetzung, dass zunächst eine hochauflösende Pflanzenerkennung stattfindet. Bildgebende Verfahren sind hierzu allerdings bisher nicht in der Lage, da eine Zuordnung über Pflanzenkonturen bei Überlappungen schwierig ist und die Auswerte- und Reaktionszeiten zu groß sind.

Aufgabe der vorliegenden Erfindung ist es, ein System zur Verfügung zu stellen, mit dem die Menge des verwendeten Herbizides reduziert werden kann und dabei trotzdem eine gute Wirkung gegen Unkraut erhalten wird.

Gelöst wird diese Aufgabe erfindungsgemäß durch ein System zur punktgenauen Ausbringung von Flüssigkeiten, vorzugsweise Herbiziden, umfassend oder bestehend aus

a) wenigstens einem Sprühkopf für die aufzubringende Flüssigkeit und

b) einer Auswerteeinheit zur Steuerung des Sprühkopfes bzw. der Sprühköpfe

dadurch gekennzeichnet, dass wenigstens ein lichtsensitiver Sensor vorgesehen ist, wobei der lichtsensitive Sensor oder zumindest einer der lichtsensitiven Sensoren mit mehreren für unterschiedliche Farbräume sensitiven Kanälen ausgestattet ist. Durch den Einsatz entsprechender Sensoren, und vorzugsweise von multispektralen True-Color-Sensoren, ist eine Erkennung von Echtfarben und damit auch eine direkte Pflanzenerkennung möglich.

Es hat sich in eigenen Untersuchungen gezeigt, dass die Verwendung von lichtsensitiven Sensoren mit mehreren für unterschiedliche Farbräume sensitiven Kanälen wie insbesondere multispektralen True-Color-Sensoren zu einer sehr guten Erkennung und Differenzierung von verschiedenen Pflanzen geeignet ist und dass somit Unkräuter mit einer ausgezeichneten Erkennungsrate von Kulturpflanzen oder Bodenbelägen unterschieden werden können.

Bevorzugt ist ein erfindungsgemäßes System, bei dem der lichtsensitive Sensor ein Mehrkanal-Licht-Sensor ist, vorzugsweise ein CIELab-Farb-Sensor oder ein XYZ Farbsensor ist. Dabei ist insbesondere bevorzugt, wenn der XYZ Farbsensor

a) als ein Sensor mit mindestens oder genau 3 Kanälen oder mit mindestens oder genau 7 Kanälen aufgebaut ist

oder

b) als farbsensitiver Mehrkanalsensor auf Basis plasmonischer Filter aufgebaut ist

und die vom Sensor gemessenen Daten in den CIELab-Farbraum

Es ist besonders bevorzugt, wenn der lichtsensitive Sensor ein CIELab-Farbsensor ist.

Nicht geeignete lichtsensitive Sensoren im Zusammenhang mit der Erfindung sind beispielsweise CCD-Sensoren, wie sie in Kameras eingesetzt werden..

Ein erfindungsgemäßes System ist besonders bevorzugt, bei dem der lichtsensitive Sensor durch mindestens oder genau 3 Kanäle Farbspektren detektiert und einen Farbraum im Bereich von 380 bis 1100 nm abdeckt.

Besonders bevorzugt sind erfindungsgemäße Systeme, bei denen der lichtsensitive Sensor ein True-Color-Sensor, insbesondere ein multispektraler True-Color-Sensor, ist.

In eigenen Untersuchungen hat sich gezeigt, dass die Erkennung und Differenzierung von verschiedenen Pflanzen besonders gut ist, wenn der zu detektierende Grund immer konstant ausgeleuchtet ist. Bevorzugt ist daher ein erfindungsgemäßes System, wobei das System zusätzlich eine Lichtquelle im Umfeld des Sensors umfasst, sodass ein von ihr emittierter Lichtstrahl nach Reflexion durch die zu detektierende Oberfläche überwiegend in den bereitgestellten lichtselektiven Sensor fällt. Bei der Lichtquelle kann es sich insbesondere um LED's mit vorzugsweise sehr hohem CRI (Color Rendering Index) handeln, um ein dem natürlichen Lichtspektrum ähnliches Licht zu erzeugen. Die Lichtquelle bzw. die LED's können modulierbar sein bzw. moduliert werden und/oder kaskadierbar sein oder kaskadiert werden, vorzugsweise in Stufen, um Übersprechungen zu vermeiden. Es kann auch wenigstens eine Zusatz-LED im Nah-Infrarotbereich bis 900 nm Licht imitieren, um zusätzliche Informationen vor allem im Grünen-Bereich der zu detektierenden Pflanzen zu erhalten.

Eigene Untersuchungen haben ebenfalls ergeben, dass die Erkennungsgenauigkeit verschlechtert wird, wenn sich der Abstand zwischen den zu erkennenden Pflanzen und dem Sensor während des Betriebs ändert. Ein erfindungsgemäßes System ist daher bevorzugt, bei dem das System zusätzlich einen Abstandssensor, vorzugsweise einen Laser-Triangulationsabstandssensor oder ein PDS-Array mit Triangulationsverfahren umfasst, mit dem durch unterschiedliche Messabstände entstehende Luminanzunterschiede korrigiert werden können. Durch diese Korrektur kann die Erkennungsgenauigkeit auch bei wechselnden Abständen noch weiter verbessert werden.

Die Größe der mit einem Sensor zu detektierenden Fläche ist von der erforderlichen Auflösung und von der Ausleuchtung der zu detektierenden Oberfläche abhängig. In eigenen Untersuchungen hat es sich gezeigt, dass ein erfindungsgemäßes System besonders gut geeignet ist, wenn die durch den lichtsensitiven Sensor detektierte Fläche kleiner als 150 cm$^2$, vorzugsweise kleiner als 100 cm$^2$ ist und/oder größer als 5 cm$^2$, vorzugsweise größer als 10 cm$^2$ ist. Insbesondere bevorzugt ist dabei, wenn die durch den lichtsensitiven Sensor detektierte Fläche rechteckig ist und das Verhältnis aus Breite zu Länge 1:5 bis 1:15 beträgt, vorzugsweise 1:10 beträgt.

Ein erfindungsgemäßes System ist bevorzugt, dass eine dem lichtsensitive Sensor vorgeschaltete Optik aufweist. Bevorzugt ist die Optik so angebracht, dass sie ausgetauscht werden kann. Hierdurch lässt sich das erfindungsgemäße System besonders flexibel einsetzen.

Es hat sich ebenfalls gezeigt, dass es bevorzugt ist, wenn der Sensor eine Linienoptik aufweist, die vor den lichtsensitiven Sensor geschaltet ist. Hierdurch kann die Erkennungsgenauigkeit noch weiter verbessert werden.

Es ist insbesondere bevorzugt, wenn der Sprühkopf für die aufzubringende Flüssigkeit so ausgelegt ist, dass die durch den lichtsensitiven Sensor detektierte Fläche durch Ausbringung von Flüssigkeiten vollständig benetzt werden kann.

In einer bevorzugten Ausgestaltung des erfindungsgemäßen Systems ist das System auf einem selbstangetriebenen oder nachgezogenen Wagen angebracht und kann über eine zu detektierende Fläche, auf die die Flüssigkeit, vorzugsweise das Herbizid, punktgenau aufgebracht werden soll, bewegt werden. Durch diesen Aufbau ist es möglich, große Flächen zu behandeln.

Es ist besonders bevorzugt, wenn das System zusätzlich einen Sensor umfasst, mit dem die Bewegung durch den Raum detektiert werden kann. Im einfachsten Fall handelt es sich bei dem Sensor mit dem die Bewegung durch den Raum detektiert wird, um einen Geschwindigkeitssensor, mit dem die Geschwindigkeit des Systems gemessen wird. Durch das Messen der Geschwindigkeit kann die Auswerteeinheit zur Steuerung des Sprühkopfes bzw. der Sprühköpfe den genauen Zeitpunkt berechnen, an dem der Sprühkopf sich über der durch den lichtsensitiven Sensor detektieren Oberfläche befindet. Abhängig davon, ob an der Oberfläche Unkräuter detektiert wurden, erfolgt eine Steuerung des Sprühkopfes bzw. von mehreren Sprühköpfen.

Erfindungsgemäß bevorzugt ist ein System, das zusätzlich

i) zumindest einen Vorratsbehälter für die aufzubringende Flüssigkeit umfasst

und/oder

ii) zumindest eine Pumpe für die aufzubringende Flüssigkeit umfasst

und/oder

iii) zumindest einen Drucksensor zur Kontrolle des Systemdrucks und/oder zur Pumpensteuerung umfasst.

Um eine möglichst große Fläche detektieren zu können, hat es sich als vorteilhaft erwiesen, wenn das erfindungsgemäße System mehrere lichtsensitive Sensoren umfasst und jedem lichtsensitiven Sensor zumindest ein Sprühkopf zugeordnet ist. Dabei ist es besonders bevorzugt, wenn die Sensoren in einer Reihe und die Reihe senkrecht zur Bewegungsrichtung des Systems angeordnet ist.

Besonders bevorzugt ist ein erfindungsgemäßes System zur gezielten Bekämpfung von Unkraut durch punktgenaues Ausbringen von Herbiziden auf das Unkraut. Hierbei wird eine Fläche von dem lichtsensitiven Sensor detektiert und die vom lichtsensitiven Sensor ermittelten Daten werden an die Auswerteeinheit übergeben. Die Auswerteeinheit ermittelt anschließend, ob in der detektierten Fläche ein Unkraut oder verschiedene Unkräuter vorhanden sind und steuert anschließend den Sprühkopf bzw. ein vor dem Sprühkopf vorgeschaltetes Ventil. Sofern Unkraut auf der Fläche detektiert wurde, wird der Sprühkopf bzw. ein vor dem Sprühkopf vorgeschaltetes Ventil geöffnet und das Herbizid wird punktgenau auf das Unkraut versprüht. Sofern in der detektierten Fläche kein Unkraut gefunden wird, wird der Sprühkopf bzw. das vor dem Sprühkopf vorgeschaltete Ventil nicht geöffnet.

Vorzugsweise handelt es sich bei dem Unkraut um Monokotyledonen oder Dikotyledonen, besonders bevorzugt Monokotyledonen oder Dikotyledonen mit einer planen Oberfläche über 0,3 cm$^3$ und/oder bis 3 cm$^2$. Dies entspricht bei Dikotyledonen Pflanzen im 2- bis 4-BlattStadium. In diesem Stadium ist eine effektive Unkrautbekämpfung besonders gut möglich und es hat sich gezeigt, dass mit einem erfindungsgemäßen System Monokotyle und Dikotyle mit einer planen Oberfläche über 0,3 cm$^3$ und/oder bis 3 cm$^2$ sehr gut erkannt werden können.

Bei den im Rahmen der Erfindung verwendeten Herbiziden kann es sich um Herbizide natürlichen Ursprunges handeln oder um synthetisch hergestellte Herbizide. Insbesondere Herbizide natürlichen Ursprungs, die durch Extraktion von Pflanzen gewonnen und häufig als Bioherbizide bezeichnet werden, sind sehr teuer. Es hat sich gezeigt, dass durch die Verwendung eines erfindungsgemäßen Systems der Verbrauch von Herbiziden deutlich gesenkt werden kann und dass teure Bioherbizide sehr kosteneffektiv verwendet werden können.

Es hat sich allerdings auch gezeigt, dass die Verwendung des Systems nicht nur auf das punktgenaue Ausbringen von Herbiziden auf Unkraut beschränkt ist. Mit dem erfindungsgemäßen System können auch Pflanzenschädlinge wie beispielsweise Milben und Spinnentiere, Bakterien, Pilze, Schadinsekten oder Schnecken erkannt werden und entsprechend Akarizide, Bakterizide, Fungizide, Insektizide oder Molluskizide punktuell ausgebracht werden. Es besteht auch die Möglichkeit, Pflanzenkrankheiten oder Mineralstoffmangelerscheinungen bei den Nutzpflanzen zu detektieren und diese durch beispielsweise punktuelles Versprühen von Düngern, Mittel zum Wundverschluss oder Wachstumsreglern zu bekämpfen. Erfindungsgemäß bevorzugt ist somit ebenfalls ein System, bei dem es sich bei der ausgebrachten Flüssigkeit um Akarizide, Bakterizide, Fungizide, Insektizide, Molluskizide, Dünger, Mittel zum Wundverschluss oder Wachstumsregler handelt.

Ebenfalls bevorzugt ist ein erfindungsgemäßes System, bei dem jedem lichtsensitiven Sensor zwei, drei, vier oder mehr Sprühkopfe für jeweils eine aufzubringende Flüssigkeit zugeordnet sind, die einzeln von der Auswerteeinheit gesteuert werden. So ist es möglich, in einem Durchgang verschiedene Behandlungen durchzuführen. Abhängig von der durch die Auswerteeinheit detektierten Situation bzw. Bedrohung für die Nutzpflanzen können entsprechende Pflanzenschutzmittel oder Dünger punktuell versprüht werden.

Erfindungsgemäß bevorzugt ist ein System, bei dem der lichtsensitive Sensor

a) ein CIElab-Farbsensor ist

oder

b) ein Mehrkanal-Licht-Sensor ist, vorzugsweise XYZ Farbsensor, und die mit dem Mehrkanal-Licht-Sensor gemessenen Daten in den CIELab-Farbraum umgerechnet werden

und zur Erkennung von Objekten oder Pflanzen ein neuer Kanal d durch Subtraktion des CIELab-Kanals a vom CIELab-Kanal b berechnet wird.

Es hat sich gezeigt, dass durch die Verwendung des Kanals d (d=b-a) eine besonders gute Bestimmung von Unkraut erreicht werden kann.

Erfindungsgemäß bevorzugt ist ein System, bei dem der lichtsensitive Sensor

a) ein CIElab-Farbsensor ist

oder

b) ein Mehrkanal-Licht-Sensor ist, vorzugsweise XYZ Farbsensor, und die mit dem Mehrkanal-Licht-Sensor gemessenen Daten in den CIELab-Farbraum umgerechnet werden

und zur Erkennung von Objekten oder Pflanzen der Delta-E Wert bestimmt wird.

Der Delta-E Wert beschreibt den Farbabstand zweier Farborte im Lab-Farbraum und wird nach ISO 12647 und ISO 13655 für die Objekterkennung wie folgt berechnet:

$$\Delta E_{HG,Obj} = \sqrt{(L_{HG} - L_{Obj})^2 + (a_{HG} - a_{Obj})^2 + (b_{HG} - b_{Obj})^2}$$

Wobei HG für Hintergrund und Obj für Objekt steht.

Besonders bevorzugt ist ein erfindungsgemäßes System bei dem zur Erkennung von Objekten oder Pflanzen

i) der Delta-E Wert bestimmt wird und durch die Auswerteeinheit mit Normwerten verglichen wird,

ii) anschließend eine Analyse der Einzelkanäle des CIELab-Farbraums und des durch Subtraktion des CIELab-Kanals a vom CIELab-Kanal b berechneten d-Kanals erfolgt und durch die Auswerteeinheit mit Normwerten verglichen wird und

iii) ein Vergleich der CIELab-Kanäle L,a,b und des berechneten Kanals relativ zueinander erfolgt.

Es hat sich gezeigt, dass durch Abwandlung des hier beschriebenen erfindungsgemäßen Systems nicht nur die punktgenaue Ausbringung von Flüssigkeiten möglich ist, sondern auch eine punktuelle thermische oder mechanische Behandlung. Ein weiterer Aspekt der vorliegenden Erfindung ist daher ein System zur punktgenauen thermischen und/oder mechanischen Behandlung, umfassend oder bestehend aus

a) einer Einheit zur thermischen und/oder mechanischen Behandlung und
b) einer Auswerteeinheit zur Steuerung der Einheit zur thermischen und/oder mechanischen Behandlung

dadurch gekennzeichnet, dass wenigstens ein lichtsensitiver Sensor vorgesehen ist, wobei der lichtsensitive Sensor oder zumindest einer der lichtsensitiven Sensoren mit mehreren für unterschiedliche Farbräume sensitiven Kanälen ausgestattet ist.

Alle obigen Ausführungen zum erfindungsgemäßen System zur punktgenauen Ausbringung von Flüssigkeiten gelten für das System zur punktgenauen thermischen und/oder mechanischen Behandlung entsprechend, insbesondere die obigen Ausführungen zum lichtsensitiven Sensor und zur Auswertung der Daten.

Bei der thermischen Behandlung kann es sich beispielsweise um das punktuelle Abbrennen mit einer Gasflamme handeln. Anstelle eines Sprühkopfes für die aufzubringende Flüssigkeit wird dann ein Abflammbrenner, vorzugsweise ein Abflammbrenner mit Piezozündung, montiert, der über der zu behandelnden Fläche von der Auswerteinheit gezündet wird. Auch der punktuelle Einsatz von Infrarotstrahlung, Heißwasser, Heißwasser-Schaum oder Wasserdampf zur thermischen Behandlung ist erfindungsgemäß vorgesehen.

Bei der Einheit zur mechanischen Behandlung kann es sich beispielsweise um ein Unterschneidemesser, eine Walze, eine Nachlaufharke oder Bürste handeln.

Ein weiterer Aspekt der vorliegenden Erfindung ist die Verwendung eines erfindungsgemäßen Systems zur

a) gezielten Bekämpfung von Unkraut durch punktgenaues Ausbringen von Herbiziden auf das Unkraut

und/oder

b) die gezielte Düngung von Pflanzen durch punktgenaues Ausbringen von Düngern auf die zu düngende Stelle

und/oder

c) das punktgenaues Ausbringen von Pflanzenschutzmitteln vorzugsweise auf Kommunalflächen (insbesondere Pflaster oder Steinplatten), Ackerflächen mit Bewuchs, Ackerflächen ohne Bewuchs, Brachland, Bahndämmen, Reihenkulturen, Mulchflächen, Asphaltflächen, Schotterflächen, Sandflächen, Flächen mit feinem Splitt und/oder Grünflächen (insbesondere Rasenflächen).

Ein weiterer Aspekt im Zusammenhang mit der vorliegenden Erfindung betrifft ein Verfahren zur punktgenauen Ausbringung von Flüssigkeiten, vorzugsweise Herbiziden, umfassend die folgenden Schritte:

- Detektieren einer Fläche mit einem lichtsensitiven Sensor, wobei der Sensor mit mehreren für unterschiedliche Farbräume sensitiven Kanälen ausgestattet ist,
- Vergleichen der detektierten Werte mit Normwerten durch eine Auswerteeinheit
- Steuern des Sprühkopfes durch die Auswerteeinheit.

Vorzugsweise erfolgt der Vergleich der detektierten Werte mit Normwerten aus einer Datenbank in der Normwerte für verschieden Untergründe (Kommunalflächen (insbesondere Pflaster oder Steinplatten), Ackerflächen mit Bewuchs, Ackerflächen ohne Bewuchs, Brachland, Bahndämmen, Reihenkulturen, Mulchflächen, Asphaltflächen, Schotterflächen, Sandflächen, Flächen mit feinem Splitt und/oder Grünflächen (insbesondere Rasenflächen)) und für Pflanzen gespeichert sind. Vorzugsweise hat die Auswerteeinheit eines erfindungsgemäßen Systems eine integrierte Datenbank oder Zugriff auf eine Datenbank.

Die Steuerung des Sprühkopfes erfolgt dabei vorzugsweise über die Steuerung eines dem Sprühkopf vorgeschalteten Ventils, wobei auch Sprühköpfe mit integriertem Ventil verwendet werden können. Unter Steuern des Sprühkopfes wird hierbei verstanden, dass der Sprühkopf bzw. das vorgeschaltete Ventil geöffnet oder geschlossen wird.

Erfindungsgemäß bevorzugt ist ein Verfahren, bei dem die Fläche mittels eines Mehrkanal-Licht-Sensors detektiert wird, vorzugsweise mittels eines CIElab-Farb-Sensors oder eines XYZ Farbsensors detektiert wird. Dabei ist es insbesondere bevorzugt, wenn der XYZ Farbsensor

    a) als ein Sensor mit mindestens oder genau 3 Kanälen oder mit mindestens oder genau 7 Kanälen aufgebaut ist

oder

    b) als farbsensitiver Mehrkanalsensor auf Basis plasmonischer Filter aufgebaut ist

und die vom Sensor gemessenen Daten in den CIELab-Farbraum umgerechnet werden.

Ein erfindungsgemäß bevorzugtes Verfahren umfasst somit ebenfalls den folgenden Schritt:

- Umrechnen der vom Sensor gemessenen Daten in den CIELab-Farbraum.

Bei der zu detektierenden Fläche handelt es sich vorzugsweise um eine Fläche ausgewählt aus der Gruppe bestehend aus Kommunalflächen (insbesondere Pflaster oder Steinplatten), Ackerflächen mit Bewuchs, Ackerflächen ohne Bewuchs, Brachland, Bahndämmen, Reihenkulturen, Mulchflächen, Asphaltflächen, Schotterflächen, Sandflächen, Flächen mit feinem Splitt und Grünflächen.

Erfindungsgemäß bevorzugt ist ebenfalls ein erfindungsgemäßes Verfahren, bei dem der lichtsensitive Sensor und der Sprühkopf über die zu detektierende Fläche geführt werden.

Erfindungsgemäß bevorzugte Verfahren weisen ebenfalls zumindest einen der nachfolgenden Schritte auf:

- Messen des Abstandes zwischen lichtsensitivem Sensor und detektierter Fläche, vorzugsweise mit einem Laser-Triangulationsabstandssensor oder einem PDS-Array mit Triangulationsverfahren

und/oder

- Korrektur der durch unterschiedliche Messabstände entstehenden Luminanzunterschiede

und/oder

- Ausleuchten der zu detektierenden Oberfläche

und/oder

- Bewegen des lichtsensitiven Sensors und des Sprühkopfs über die zu detektierende Fläche und Messen der Geschwindigkeit mit der der lichtsensitive Sensor und der Sprühkopf über die zu detektierende Fläche bewegt wird.

In einem erfindungsgemäß besonders bevorzugten Verfahren wird zumindest einer der nachfolgenden Verfahrensschritte durchgeführt:

- Berechnung eines Delta-E Wertes,
- Berechnung eines Kanals d durch Subtraktion des CIELab-Kanals a vom CIELab-Kanal b,
- Vergleich des berechneten Delta-E Wertes und/oder des berechneten Kanals d mit Normwerten,
- Vergleich der CIELab-Kanäle L,a,b und des berechneten Kanals relativ zueinander und/oder mit Normwerten.

Aufgrund des Vergleichs der durch den lichtsensitiven Sensor ermittelten Werte und der daraus durch die Auswerteeinheit berechneten Werte, insbesondere des Delta-E Wertes und/oder des berechneten Kanals d, und dem Abgleich der Ermittelten und/oder berechneten Werte mit Normwerten können beispielsweise Untergründe und/oder Pflanzen detektierte werden. Abhängig von der Identifikation kann die Auswerteeinheit den Sprühkopf oder die Sprühköpfe steuern. Wird beispielsweise ein Unkraut von der Auswerteeinheit erkannt, dann wird der Sprühkopf so gesteuert, dass ein Herbizid über dem detektieren Unkraut bzw. in der detektierten Fläche versprüht wird.

Besonders bevorzugt ist ein erfindungsgemäßes Verfahren, bei dem die Datenbank während des Betriebes kontinuierlich aktualisiert wird. In der Datenbank werden als Normwerte vorzugsweise die Reflexionseigenschaften von Pflanzen und Untergründen (Böden) erfasst. Die Datenbanken beinhalten dann charakteristische Reflexionseigenschaften von Pflanzen in den jeweiligen Farbräumen, wie RGB, XYZ und vorzugsweise CIE-Lab. Durch eine Kalibrierung des Systems, vorzugsweise eine Kalibrierfahrt, können aktuelle Reflexionseigenschaften beispielsweise von unbewachsenen oder unverbauten Flächen bestimmt werden und auch hierdurch kann ein Datenabgleich bzw. eine Anpassung stattfinden; insbesondere kann eine standortspezifische Korrektur der Datenbanken stattfinden, um den Detektionserfolg zu erhöhen und umweltspezifische, tagesaktuelle Einflüsse zu minimieren bzw. zu kompensieren.

Weiter vorzugsweise können das System und das Verfahren derart ausgelegt sein, dass neben den mit dem lichtsensitiven Sensor bestimmten Farbwerten auch die geometrischen Abstände Beispielsweise zwischen Boden und Sensor oder Optik und auch Reflexionseigenschaften wie beispielsweise eine veränderte Blattstellung der Meßobjekte ermittelt und bei der Bestimmung der Objekte oder Pflanzen herangezogen werden. Insbesondere bei regelmäßig aktualisierten Datenbanken und/oder bei mit der Auswerteeinheit gekoppelten kontinuierlich aktualisierten Entscheidungsmodellen (beispielsweise Fuzzy-Logik) kann das System und das Verfahren kontinuierlich im Betrieb verbessert werden. Im Rahmen der vorliegenden Erfindung werden vorzugsweise mehrere der vorstehend als bevorzugt bezeichneten Aspekte gleichzeitig verwirklicht; insbesondere bevorzugt sind die sich aus den beigefügten Ansprüchen ergebenden Kombinationen solcher Aspekte und der entsprechenden Merkmale.

Die Erfindung wird nun anhand eines schematisch in der Zeichnung gezeigten Ausführungsbeispiels erläutert. Weitere Aspekte der vorliegenden Erfindung ergeben sich aus der nachfolgenden Beschreibung sowie den beigefügten Patentansprüchen und Figuren. In der Zeichnung zeigen:

FIG 1    eine schematische Darstellung der Grundelemente des erfindungsgemäßen Systems (10),

FIG 2    schematisch eine mobile, das erfindungsgemäße System bzw. Verfahren nutzende Applikationseinheit zur gezielten Bekämpfung von Unkraut; und

FIG 3    schematisch anhand eines Schaubildes die Grundelemente der Applikationseinheit.

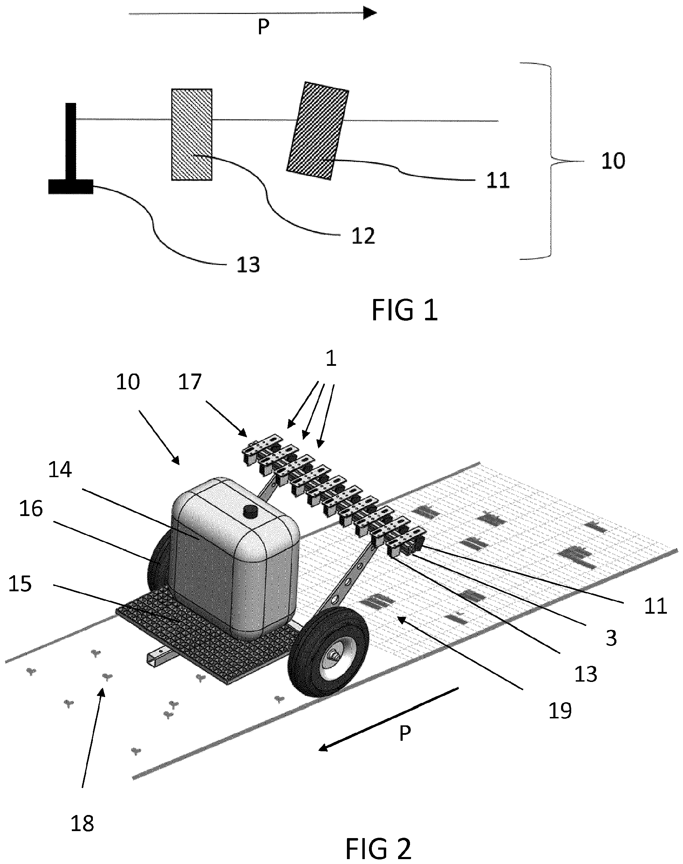

Figur 1 zeigt schematisch die Grundelemente eines erfindungsgemäßen Systems 10 mit einer Lichtquelle 11, einem lichtsensitiven Sensor 12 und mit einem von normalerweise mehreren Sprühköpfen 13. Mit dem Sprühkopf 13 kann eine aufzubringende Flüssigkeit wie insbesondere ein Herbizid versprüht werden. Der Sprühkopf 13 ist über ein Schlauch- oder Rohrsystem (nicht abgebildet) mit einem Vorratsbehälter für die aufzubringende Flüssigkeit verbunden (nicht abgebildet). Der Pfeil deutet die Bewegungsrichtung des erfindungsgemäßen Systems 10 an.

Figur 2 zeigt eine das erfindungsgemäße System 10 verwendende Applikationseinheit 20 mit einem Vorratsbehälter 14 für die aufzubringende Flüssigkeit. Die Applikationseinheit ist hier auf einem Wagen 15 mit zwei Rädern 16 angebracht und kann über die zu detektierende Fläche gezogen werden. Auf einer Stange 17 befinden sich insgesamt zehn Einheiten 1 aus jeweils einem lichtsensitiven Sensor 11, einer dem Sensor 11 vorgeschalteten Receiverlinse 3 und einem Sprühkopf 13, wobei die einzelnen Einheiten 1 quer zur mit dem Pfeil P angedeuteten Bewegungsrichtung der Applikationseinheit 20 versetzt zueinander angeordnet sind, um eine gezielte Ausbringung über die gesamte Breite der Applikationseinheit 20 realisieren zu können. Bei den Sensor-Düseneinheiten 1 können die Düse des Sprühkopfs 13, der Sensor 11 und die Receiverlinse 3 zueinander verstellbar sein, oder sie weisen vorzugsweise zueinander eine feste Anordnung auf. Besonders vorteilhaft kann die Receiverlinse 3 in einem Winkel von 20-25° relativ zur Bewegungsrichtung angestellt sein, um bei vereinfachtem Aufbau eine günstige Detektion zu ermöglichen. Mit jeweils einem der lichtsensitiven Sensoren 11 innerhalb einer der Einheiten 1 des Systems 10 bzw. der Applikationseinheit 20 kann Unkraut 18 detektiert und punktgenau durch gezieltes Ansteuern bzw. Beaufschlagen des jeweils am besten positionierten Sprühkopfs 13 mit einer Flüssigkeit wie beispielsweise einem geeigneten Herbizid besprüht werden. Die grau hinterlegte Fläche 19 zeigt exemplarisch eine besprühte Fläche.

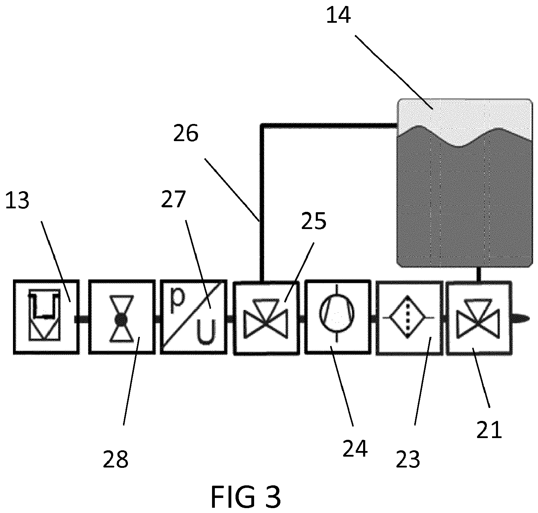

In Figur 3 sind schematisch die einzelnen Komponenten für eine Einheit 1 auf der der Applikationseinheit 20 dargestellt. Der Vorratsbehälter 14 dient selbstverständlich der Flüssigkeitsversorgung mehrerer Sprühköpfe 13 und hat entsprechend ein geeignetes Füllvolumen. Um bei den ohnehin geringen Flüssigkeitsmengen Restmengen zu vermeiden, besteht der Behälter aus einem aufrechtstehenden Zylinder mit einem Durchmesser von beispielsweise etwa 400 mm und einem trichterförmigen Auslauf. Im oberen Teil befindet sich vorzugsweise ein Einlauf (nicht dargestellt), der auch zum Mischen und Rühren benutzt werden kann.

Am unteren Auslauf kann über einen 3-Wegehahn 22 manuell zwischen Ansaugen auf dem Tank und Ansaugen aus einer Injektionsschleuse umgeschaltet werden. Stromabwärts des 3-Wegeans 22 folgt ein Vorfilter 23 und eine 12V Membranpumpe 24, um für einen geeigneten Arbeitsdruck von beispielsweise etwa 2,5 bis 3,2 bar sowie eine ausreichende Förderleistung zu sorgen. Die Förderleistung kann über eine Steuereinheit 25 manuell begrenzt werden. Eine Ab- und Anschaltautomatik ist vorzugsweise unmittelbar in die Pumpe 24 integriert.

Über einen weiteren 3-Wegehahn kann zwischen Rühr-oder Mischfunktion durch umleiten des Inhalts des Vorratsbehälter 14 über die Rückleitung 26 in den Vorratsbehälter 14 und Spritzfunktion zum einen den jeweiligen Sprühkopf 13 tragenden Gestänge (17, Fig. 2) umgeschaltet werden. Ein ventilnahe nachgeschaltete Drucksensor 27 dient hier ausschließlich der Kontrolle des Systemdrucks, kann aber auch zur Pumpensteuerung eingesetzt werden. Am Spritzgestänge befinden sich im Abstand von 10 cm 10 individuell schaltbare Ventile, denen unmittelbar jeweils ein Sprühkopf 13 mit Düse folgt, wobei die Düse beispielsweise einen Abstrahlwinkel von 10° aufweisen kann.

Die Erfindung wurde mit Bezug auf das bevorzugte Anwendungsgebiet, nämlich die punktgenau Ausbringung von Flüssigkeiten wie Herbiziden zu Unkrautbekämpfung insbesondere in der Landwirtschaft oder im Gartenbau beschrieben. Sie ist auch bei jeglichen Arten von Grünflächen und Parkflächen einsetzbar. Dieselbe Systemtechnik sowie die Verfahren sind analog anwendbar für die punktgenau thermische und/oder mechanische Behandlung von Unkraut, wozu dann anstelle eines Sprühkopfes eine entsprechende Einheit zur thermischen und/oder mechanischen Behandlung zum Einsatz käme.

## Patentansprüche

1. System zur punktgenauen Ausbringung von Flüssigkeiten, vorzugsweise Herbiziden, oder zur punktgenauen thermischen und/oder mechanischen Behandlung, insbesondere bei der Unkrautbekämpfung, umfassend oder bestehend aus

   a) wenigstens einem Sprühkopf (13) für die aufzubringende Flüssigkeit oder wenigstens einer Einheit zur thermischen und/oder mechanischen Behandlung und
   b) einer Auswerteeinheit zur Steuerung des Sprühkopfes (13) bzw. der Sprühköpfe oder zur Steuerung der Einheit bzw. der Einheiten zur thermischen und/oder mechanischen Behandlung,

   **dadurch gekennzeichnet, dass** wenigstens ein lichtsensitiver Sensor (11) vorgesehen ist, der mit mehreren für unterschiedliche Farbräume sensitiven Kanälen ausgestattet ist.

2. System nach Anspruch 1, **dadurch gekennzeichnet, dass** der lichtsensitive Sensor ein Mehrkanal-Licht-Sensor ist, vorzugsweise ein CIElab-Farb-Sensor oder ein XYZ Farbsensor ist.

3. System nach einem der vorherigen Ansprüche, **dadurch gekennzeichnet, dass** das System zusätzlich eine Lichtquelle im Umfeld des Sensors umfasst, sodass ein von der Lichtquelle emittierter Lichtstrahl nach Reflexion durch die zu detektierende Oberfläche überwiegend in den bereitgestellten lichtselektiven Sensor fällt.

4. System nach Anspruch 3, **dadurch gekennzeichnet, dass** die Lichtquelle wenigstens eine LED oder mehrere LED's aufweist, die vorzugsweise modulierbar und/oder kaskadierbar sind, wobei vorzugsweise wenigstens eine Zusatz-LED im Nah-Infrarotbereich bis 900 nm vorgesehen ist.

5. System nach einem der vorherigen Ansprüche, **dadurch gekennzeichnet, dass** das System zusätzlich einen Abstandssensor, vorzugsweise einen Laser-Triangulationsabstandssensor oder ein PDS-Array mit Triangulationsverfahren umfasst, mit dem durch unterschiedliche Messabstände entstehende Luminanzunterschiede korrigierbar sind.

6. System nach einem der vorherigen Ansprüche, **dadurch gekennzeichnet, dass** das System, vorzugsweise als Applikationseinheit (19), mobil ist und insbesondere auf einem selbstangetriebenen oder nachgezogenen Wagen (15) angebracht ist und über eine zu detektierende Fläche, auf die die Flüssigkeit, vorzugsweise das Herbizid, punktgenau aufgebracht werden soll, bewegbar ist.

7. System nach einem der vorherigen Ansprüche, **dadurch gekennzeichnet, dass** das System zusätzlich einen Sensor umfasst, mit dem die Bewegung durch den Raum detektierbar ist.

8. System nach einem der vorherigen Ansprüche, **dadurch gekennzeichnet, dass** das System und/oder die Applikationseinheit (19) zusätzlich

i) zumindest einen Vorratsbehälter (14) für die aufzubringende Flüssigkeit umfasst

und/oder

ii) zumindest eine Pumpe (24) für die aufzubringende Flüssigkeit umfasst

und/oder

iii) zumindest einen Drucksensor (27) zur Kontrolle des Systemdrucks und/oder zur Pumpensteuerung umfasst.

9. System nach einem der vorherigen Ansprüche, **dadurch gekennzeichnet, dass** das System mehrere lichtsensitive Sensoren (11) umfasst und jedem lichtsensitiven Sensor ein Sprühkopf (13) zugeordnet ist, wobei vorzugsweise jeder Sensor (11) und jeder Sprühkopf (13), insbesondere zusammen mit einer dem Sensor (11) vorgeschalteten Receiverlinse (3), eine Einheit (1) bilden.

10. System nach einem der vorherigen Ansprüche, **dadurch gekennzeichnet, dass** jedem Sensor, vorzugsweise Sensor und Lichtquelle, eine Optik, vorzugsweise eine Linienoptik, zugeordnet ist.

11. Verwendung eines Systems nach einem der Ansprüche 1 bis 10 zur gezielten Bekämpfung von Unkraut durch punktgenaues Ausbringen von Herbiziden auf das Unkraut.

12. Verfahren zur punktgenauen Ausbringung von Flüssigkeiten, vorzugsweise Herbiziden, oder zur punktgenauen thermischen und/oder mechanischen Behandlung, insbesondere bei der Unkrautbekämpfung, umfassend die folgenden Schritte:

- Detektieren einer Fläche mit einem lichtsensitiven Sensor, wobei der Sensor mit mehreren für unterschiedliche Farbräume sensitiven Kanälen ausgestattet ist,
- Vergleichen der detektierten Werte mit Normwerten durch eine Auswerteeinheit
- Steuern des Sprühkopfes durch die Auswerteeinheit, oder Steuern der Einheiten zur thermischen und/oder mechanischen Behandlung durch die Auswerteeinheit.

13. Verfahren nach Anspruch 12, **dadurch gekennzeichnet, dass** die Fläche über drei Kanäle des lichtsensitiven Sensors detektiert wird, vorzugweise über Kanäle im CIElab-Farbraum.

14. System oder Verfahren nach einem der vorhergehenden Ansprüche mit einem CIElab-Farb-Sensor, oder mit einem Mehrkanal-Licht-Sensor, vorzugsweise XYZ Farbsensor, wobei die mit dem Mehrkanal-Licht-Sensor gemessenen Daten in den CIELab-Farbraum umgerechnet werden, **dadurch gekennzeichnet, dass** zur Erkennung von Objekten oder Pflanzen

k) ein Delta-E Wert, vorzugsweise nach der Formel

$$\Delta E_{HG,Obj} = \sqrt{(L_{HG} - L_{Obj})^2 + (a_{HG} - a_{Obj})^2 + (b_{HG} - b_{Obj})^2}$$

bestimmt wird und durch die Auswerteeinheit mit Normwerten verglichen wird,
kk) anschließend eine Analyse der Einzelkanäle des CIELab-Farbraums und des durch Subtraktion des CIELab-Kanals a vom CIELab-Kanal b berechneten d-Kanals erfolgt und durch die Auswerteeinheit mit Normwerten verglichen wird, und
kkk) ein Vergleich der CIELab-Kanäle L,a,b und des berechneten Kanals relativ zueinander erfolgt.

15. System oder Verfahren nach einem der Ansprüche 12 bis 14, **dadurch gekennzeichnet, dass** eine Datenbank mit den Normwerten während des Betriebes kontinuierlich aktualisiert wird

FIG 1

FIG 2

14

26

13    27    25

28

FIG 3

24    23    21

Europäisches
Patentamt

European
Patent Office

Office européen
des brevets

# EUROPÄISCHER RECHERCHENBERICHT

Nummer der Anmeldung

EP 16 19 7536

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Sascha In Der Stroth ET AL: "Weed detection based on spectral imaging systems (SIS) with CMOS -cameras" In: "Bornimer Agrartechnische Berichte", 1. Juli 2004 (2004-07-01), Institut für Agrartechnik Bornim e.V., Potsdam-Bornim, XP055355883, ISSN: 0947-7314 Bd. 36, Seiten 55-58, | 1-4,6,7, 10-13,15 | INV. A01M7/00 G01N21/25 G01N21/29 A01B79/00 |
| Y | * Seite 55, Spalte 1, Zeile 1 - Seite 58, Spalte 1, Zeile 23; Abbildungen; Tabellen * ----- | 5,8,9,14 | |
| X | DE 44 13 739 A1 (DEUTSCHE FORSCH LUFT RAUMFAHRT [DE]; TECH UNI MUENCHEN BAYER LANDES [D] 26. Oktober 1995 (1995-10-26) * Spalte 1, Zeilen 3-7,25-33 * * Spalte 2, Zeile 23 - Spalte 4, Zeile 17 * * Spalte 6, Zeile 15 - Spalte 9, Zeile 17; Anspruch 5; Abbildungen * ----- | 1-15 | |
| X | DE 102 39 129 A1 (AMAZONEN WERKE DREYER H [DE]) 11. März 2004 (2004-03-11) | 1-4 | RECHERCHIERTE SACHGEBIETE (IPC) A01M G01N |
| Y | * Seite 2, Absatz 17 - Seite 4, Absatz 46; Abbildungen * ----- | 5-9,14 | A01B |
| Y | DE 103 49 324 A1 (AMAZONEN WERKE DREYER H [DE]) 25. Mai 2005 (2005-05-25) * Seite 2, Absatz 4-13 * * Seite 3, Absatz 26-29; Abbildungen * ----- -/-- | 5 | |

Der vorliegende Recherchenbericht wurde für alle Patentansprüche erstellt

| Recherchenort | Abschlußdatum der Recherche | Prüfer |
|---|---|---|
| München | 22. März 2017 | Schlichting, N |

Europäisches
Patentamt

European
Patent Office

Office européen
des brevets

# EUROPÄISCHER RECHERCHENBERICHT

**Nummer der Anmeldung**

EP 16 19 7536

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG   (IPC) |
|---|---|---|---|
| Y | DE 196 42 439 C1 (GANZELMEIER HEINZ DR ING [DE]; RAUTMANN DIRK DIPL ING [DE]; ZWERGER PE) 20. November 1997 (1997-11-20) * Spalte 1, Zeile 39 - Spalte 3, Zeile 27 * * Spalte 5, Zeile 45 - Spalte 6, Zeile 54; Abbildungen * ----- | 6 | |
| Y | DE 698 17 421 T2 (DICKEY-JOHN CORP.) 24. Juni 2004 (2004-06-24) * Seite 3, Absätze 24,25 * * Seite 4, Absatz 28-31 * * Seite 5, Absatz 35; Ansprüche 13,16; Abbildungen 1a,1b * ----- | 7,8 | |
| Y | Andrew Wilson: "Imaging systems tackle color measurement", Vision Systems Design, 1. August 2007 (2007-08-01), Seiten 1-12, XP055356011, Tulsa, Oklahoma Gefunden im Internet: URL:http://www.vision-systems.com/articles /print/volume-12/issue-8/features/product- focus/imaging-systems-tackle-color-measure ment.html [gefunden am 2017-03-17] * Seite 1, Absatz 1-4 * * Seite 2, Absatz 4 * * Seite 3, Absätze 1,2 * * Seite 7, Absätze 3,4 * * Seite 9, Absatz 2 * ----- | 14 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 22. März 2017 | Schlichting, N |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 19 7536

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-03-2017

| Im Recherchenbericht angeführtes Patentdokument | | Datum der Veröffentlichung | Mitglied(er) der Patentfamilie | | Datum der Veröffentlichung |
|---|---|---|---|---|---|
| DE 4413739 | A1 | 26-10-1995 | DE | 4413739 A1 | 26-10-1995 |
| | | | FR | 2718921 A1 | 27-10-1995 |
| | | | NL | 1000061 C2 | 03-06-1996 |
| DE 10239129 | A1 | 11-03-2004 | DE | 10239129 A1 | 11-03-2004 |
| | | | EP | 1394530 A1 | 03-03-2004 |
| DE 10349324 | A1 | 25-05-2005 | KEINE | | |
| DE 19642439 | C1 | 20-11-1997 | AU | 4862397 A | 11-05-1998 |
| | | | DE | 19642439 C1 | 20-11-1997 |
| | | | WO | 9816824 A1 | 23-04-1998 |
| DE 69817421 | T2 | 24-06-2004 | AR | 011678 A1 | 30-08-2000 |
| | | | AU | 704907 B2 | 06-05-1999 |
| | | | BR | 9800771 A | 06-03-2001 |
| | | | CA | 2228272 A1 | 26-08-1998 |
| | | | DE | 69817421 D1 | 02-10-2003 |
| | | | DE | 69817421 T2 | 24-06-2004 |
| | | | EP | 0864369 A2 | 16-09-1998 |
| | | | HU | 9800394 A2 | 28-10-1998 |
| | | | RO | 118055 B | 30-01-2003 |
| | | | US | 5911362 A | 15-06-1999 |

EPO FORM P0461

Für nähere Einzelheiten zu diesem Anhang : siehe Amtsblatt des Europäischen Patentamts, Nr.12/82